## Europäisches Patentamt
## European Patent Office
## Office européen des brevets

(19)

(11) Veröffentlichungsnummer: **0 282 837 B1**

(12)

# EUROPÄISCHE PATENTSCHRIFT

(45) Veröffentlichungstag der Patentschrift:
**08.05.91 Patentblatt 91/19**

(51) Int. Cl.⁵: **B23P 15/14, B23H 7/02**

(21) Anmeldenummer: **88103356.7**

(22) Anmeldetag: **04.03.88**

(54) Verfahren zum Fertigen eines Ovalrades.

(30) Priorität: **18.03.87 DE 3708728**

(43) Veröffentlichungstag der Anmeldung:
**21.09.88 Patentblatt 88/38**

(45) Bekanntmachung des Hinweises auf die
Patenterteilung:
**08.05.91 Patentblatt 91/19**

(84) Benannte Vertragsstaaten:
**CH DE FR GB IT LI SE**

(56) Entgegenhaltungen:
**EP-A- 0 077 097**

(56) Entgegenhaltungen:
**DD-A- 210 084**
**DE-A- 3 104 032**
**DE-A- 3 311 528**
**DE-A- 3 625 594**

(73) Patentinhaber: **Mannesmann Kienzle GmbH**
**Postfach 1640 Heinrich-Hertz-Strasse**
**W-7730 Villingen-Schwenningen (DE)**

(72) Erfinder: **Schmid, Mechtilde**
**Görlitzer Strasse 105**
**W-7730 Villingen-Schwenningen (DE)**
Erfinder: **Kelch, Heinz**
**Holzwiese 28**
**W-7744 Königsfeld 5 (DE)**

## Beschreibung

Die Erfindung betrifft ein Verfahren zum Fertigen eines Ovalrades, welches eine Umfangsverzahnung, eine Lagerbohrung und stirnseitige Laufbunde aufweist, und in einem Mengenmeßgerät im Zusammenwirken mit einem zweiten Ovalrad als Rotorelement dient.

Bekanntlich zeichnen sich Ovalrad-Mengenmeßgeräte durch weitgehende Unempfindlichkeit gegenüber Temperaturschwankungen und durch mechanische Robustheit aus, so daß auch bei einem rauhen Meßmilieu, in dem zusätzlich mit erheblichen Viskositätsschwankungen des zu messenden Fluids zu rechnen ist, gut reproduzierbare Meßergebnisse bei relativ hoher Meßgenauigkeit erzielbar sind. Dementsprechend hat ein derartiges Mengenmeßgerät ein verhältnismäßig breites Anwendungsspektrum, insbesondere eignet es sich zur Kraftstoffverbrauchsmessung, also für den Einsatz im Kraftfahrzeug.

Ovalrad-Mengenmeßgeräte erfordern jedoch eine außergewöhnlich hohe Fertigungsgenauigkeit und sind somit durch einen hohen Fertigungsaufwand belastet. Abgesehen von besonderen fertigungstechnischen Kenntnissen ist in diesem Zusammenhang insbesondere die Fülle der Einzelmaßnahmen bei der Fertigung der Ovalräder entscheidend.

So ist das derzeit übliche Verfahren zur Fertigung von Ovalrädern unter Verwendung einer speziellen Abwälzfräsmaschine dadurch gekennzeichnet, daß zunächst Ovalrad-Rohlinge von gezogenem Stangenmaterial, vorzugsweise ovalen Querschnitts abgestochen, gebohrt und beidseitig geläppt werden. Dabei entspricht die Bohrung dem Aufnahmedorn der Abwälzfräsmaschine, dessen Durchmesser einerseits in einem noch vertretbaren Verhältnis zur kleinen Querachse des herzustellenden Ovalrades stehen muß, andererseits wenigstens so groß sein sollte, daß die erzielbare axiale Haltekraft ausreicht, um ein Verdrehen des Rohlings unter der Wirkung des Wälzdrucks zu vermeiden. Die Begrenzung des Durchmessers des Aufnahmedorns hat zur Folge, daß nicht mehr als zwei Ovalräder zusammen mit beidseitig angebrachten, verlorenen Abdeckscheiben, die beim Wälzfräsen die Gratbildung an den Ovalrädern verringern, auf dem fliegend an der Abwälzfräsmaschine angeordneten Aufnahmedorn festgespannt werden können, wenn die relativ engen Fertigungstoleranzen gehalten werden sollen. Aus diesem Grunde ist es auch erforderlich, den Durchmesser des Aufnahmedorns so groß wie möglich zu wählen, um die Durchbiegung so klein wie möglich zu halten.

Diese Fertigungsbedingungen machen eine in die für den Aufnahmedorn vorgesehene Bohrung einpreßbare Lagerbuchse erforderlich, in der, um die Lagerreibung klein zu halten, eine möglichst kleine Lagerbohrung angebracht ist. Die Lagerbuchse dient ferner dazu, Laufbunde zu bilden, die es ermöglichen, daß der größte Teil der Stirnflächen des betreffenden Ovalrades gegenüber der stirnseitigen Meßkammerwand des Mengenmeßgerätes berührungsfrei umlaufen kann. Grundsätzlich soll die Reibung in der Meßkammer so gering wie möglich sein, um den Druckverlust zu senken.

Mit dem Einpressen der Lagerbuchse sind einerseits Spannungen in Kauf zu nehmen, die sich unter Umständen schädlich auswirken können, andererseits ist mit toleranzbedingten Exzentritäten zu rechnen. Dementsprechend muß, um einerseits eine geringstmögliche Rundlaufabweichung des Ovalrades, andererseits eine definierte Dichtfläche zwischen Zahnkopf und der umfangsseitigen Meßkammerwand zu erhalten, zusätzlich eine nachträgliche Bearbeitung durch Überdrehen oder Überfräsen der im Bereich der großen Ovalradquerachse liegenden Zähne vorgenommen werden.

Ein derartiges Fertigungsverfahren, bei dem lediglich das Läppen und das elektrolytische Entgraten an einer Vielzahl von Ovalrädern gleichzeitig vorgenommen werden kann, ist für eine Großserienfertigung verständlicherweise nicht geeignet. Wird außerdem die Forderung gestellt, relativ kleine Durchflußmengen mit gleicher oder möglicherweise höherer Genauigkeit zu messen, als sie bei bekannten, für größere Durchflüsse ausgelegten Ovalrad-Mengenmeßgeräten gegeben ist, können mit dem geschilderten Verfahren die dann erforderlichen Fertigungsqualitäten nicht mehr erreicht werden.

Aufgabe der vorliegenden Erfindung war es daher, ein Verfahren zur Fertigung von Ovalrädern zu schaffen, welches einerseits eine Serienfertigung gestattet, andererseits bei verringertem Fertigungsaufwand eine höhere Fertigungsqualität liefert.

Die Lösung dieser Aufgabe sieht vor, daß ein Rohling gefertigt wird, an welchem im Abstand der Breite des Ovalrades zwei planparallele Flächen ausgebildet sind, daß auf den planparallelen Flächen entsprechend dem Durchmesser und der Höhe der Laufbunde verschleißfestes und reibungsarmes Material aufgebracht wird und daß mittels einer konturgesteuerten Erodiervorrichtung die Lagerbohrung erodiert und das Ovalrad aus dem Rohling herausgeschnitten wird.

Ein bevorzugtes Verfahrensbeispiel ist dadurch gekennzeichnet, daß als Rohling eine das Ausschneiden mehrerer Ovalräder gestattende Platte gefertigt wird, daß auf den planparallelen Flächen der Platte Sperrschichten aufgebracht werden, in denen den Durchmessern der Laufbunde und einem umlaufenden Rand entsprechende Flächen freigespart sind, daß nachfolgend die Platte einer auftragenden Oberflächenbehandlung unterzogen wird und daß nach dem Entfernen der Sperrschichten mehrere Platten zu einem Plattenstapel zusammengefügt und gleichzeitig durch die Erodiervorrichtung bearbeitet werden.

Das erfindungsgemäße Verfahren löst die gestellte Aufgabe in vollem Umfange. Insbesondere gestattet es Serienfertigung mit hoher Fertigungsqualität, wobei im Vergleich mit dem Stand der Technik wesentlich weniger Fertigungsschritte erforderlich sind. Das Verfahren ermöglicht außerdem, daß die Ovalräder völlig grat- und spannungsfrei gefertigt werden können. Dementsprechend ist es auch möglich, daß das Ausschneiden der Ovalräder und das Ausräumen der Lagerbohrungen mittels einer Drahterodiervorrichtung in einem ununterbrochenen Arbeitsgang vorgenommen werden kann. Der dabei in den Ovalrädern entstehende radiale Schlitz kann sich aufgrund der Spannungsfreiheit nicht nachteilig auswirken.

Vorteilhaft ist ferner, daß bei einer Entwicklung der Ovalräder mit Hilfe einer CAD-Anlage der anfallende Koordinaten-Datensatz zur Steuerung der numerisch gesteuerten Erodiervorrichtung verwendet werden kann. Anstelle des bevorzugten Drahterodierverfahrens sind in diesem Zusammenhang selbstverständlich auch andere abtragende Verfahren, wie Elektronenstrahlschweißen oder Laserschneiden, denkbar. Bei der Fertigung größerer Ovalräder ist es möglich und daher aufgrund der Stückzahlen abzuwägen, ob ein in entsprechender Weise gesteuerter Fingerfräser eingesetzt werden muß, wobei die übrigen Merkmale des Verfahrens beibehalten werden.

Ein besonderes Merkmal des Verfahrens, das ebenfalls zur spannungsfreien Fertigung beiträgt, ist die Art und Weise, wie der Laufabstand erzeugt wird, nämlich durch Auftragen eines geeigneten, d. h. verschleißfesten und reibungsarmen, aber auch wärmebeständigen Materials in einer dünnen Schicht, und zwar vor dem Schneidvorgang. Dabei sind wiederum verschiedene Verfahren denkbar, die je nach Ausrüstung des betreffenden Fertigungsbetriebes oder der zu fertigenden Stückzahl wählbar sind, jedenfalls aber die Möglichkeit bieten, den Laufabstand der Ovalräder gegenüber den Meßkammerwänden auf eine möglichst einfache Weise zu schaffen.

Im folgenden sei die Erfindung anhand der Zeichnungen näher erläutert : Es zeigen

FIGUR 1 einen für den Erodiervorgang vorbereiteten Rohling zur Erzeugung eines einzelnen Ovalrades,
FIGUR 2 ein ausgeschnittenes Ovalrad,
FIGUR 3 eine Draufsicht auf einen plattenförmigen Rohling, aus dem mehrere Ovalräder geschnitten werden können, in einem ersten Fertigungszustand,
FIGUR 4 eine Seitenansicht der Rohlingplatte gemäß FIGUR 2,
FIGUR 5 eine Draufsicht der Rohlingplatte gemäß FIGUR 2 in einem zweiten Fertigungszustand,

FIGUR 6 eine Seitenansicht der Rohlingplatte gemäß FIGUR 5,
FIGUR 7 eine Draufsicht der Rohlingplatte in einem dritten Fertigungszustand,
FIGUR 8 einen Schnitt durch die Rohlingplatte gemäß der Schnittlinie AB in FIGUR 7,
FIGUR 9 eine Draufsicht auf eine Rohlingplatte, aus der mehrere Ovalräder in einem ununterbrochenen Arbeitsgang ausgeschnitten werden und
FIGUR 10 eine Skizze eines Stapels von Rohlingplatten während der Bearbeitung in der Erodiervorrichtung.

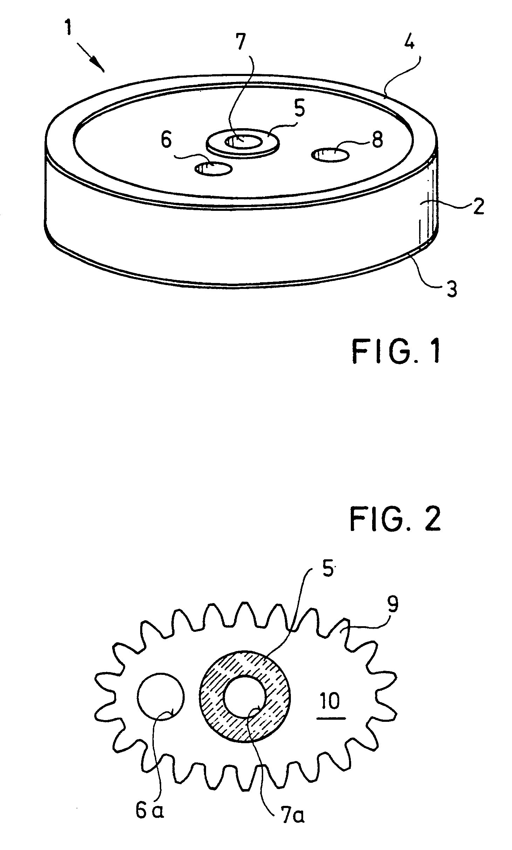

Die Prinzipdarstellung FIGUR 1 zeigt einen für den Erodiervorgang vorbereiteten Rohling 1. Der Rohling 1 stellt eine zylindrische Scheibe 2 dar, an der beidseitig ringförmige Ränder 3 und 4 sowie Laufbunde 5 beispielsweise durch Eloxieren oder Verchromen angeformt sind. Dabei dienen die Ränder 3 und 4 im wesentlichen dem Schutz der Laufbunde 5 beim Handhaben der Rohlinge 1, die auf diese Weise flach auf einer Unterlage aufgelegt oder auch gestapelt werden können, ohne die relativ kleinflächigen Laufbunde 5 zu belasten. Von den Bohrungen 6, 7 und 8 sind die Bohrungen 6 und 7 lediglich Vorbohrungen für einerseits eine Aufnahmebohrung für einen dem auszuschneidenden Ovalrad zugeordneten Impulsmagneten, andererseits die Lagerbohrung des entstehenden Ovalrades. Beide Bohrungen 6 und 7 werden im Erodierverfahren mittels einer Drahtelektrode, die in die Bohrungen eingefädelt wird, auf die Nenndurchmesser (Bohrungen 6a und 7a in FIGUR 2) ausgeräumt. Die Bohrung 8 dient der nicht dargestellten Drahtelektrode als Einfädelbohrung zum Ausschneiden der verzahnten Außenkontur 9 des Ovalrades 10, wie es in FIGUR 2 dargestellt ist.

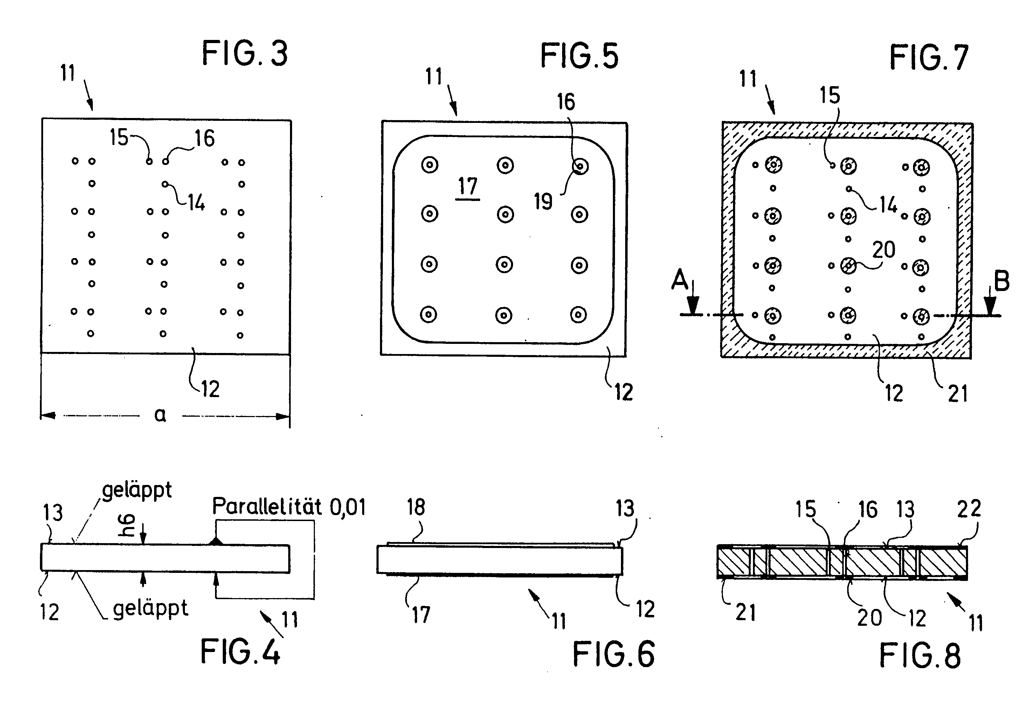

Die Draufsicht FIGUR 3 zeigt eine Rohlingplatte 11, aus der mehrere Ovalräder nacheinander ausgeschnitten werden können. Die Rohlingplatte 11 ist in einem ersten Fertigungszustand derart vorbereitet, daß ihre eine Dimension auf die Breite der zu fertigenden Ovalräder gefräst und geläppt ist, wobei, wie in der Seitenansicht FIGUR 4 dargestellt, die begrenzenden, planparallelen Flächen 12 und 13 über das Plattenmaß a von ca. 60 mm innerhalb einer relativ engen Parallelitätstoleranz von 0,01 mm liegen und ihr Abstand einer Fertigungsqualität h6 entspricht. In diesem ersten Fertigungszustand sind für jedes auszuschneidende Ovalrad eine Einfädelbohrung 14 für das Ausschneiden der Außenkontur und Vorbohrungen 15 und 16 für die Impulsmagnetöffnung und die Ovalradlagerbohrung angebracht.

Die FIGUREN 5 und 6 zeigen einen zweiten Fertigungszustand, bei dem auf den planparallelen Flächen 12 und 13 Folien 17 und 18 aufgeklebt sind, und zwar derart, daß in die Folien 17, 18 gestanzte, dem Durchmesser der zu erzeugenden Laufbunde entsprechende Öffnungen 19 konzentrisch zu den Bohrungen 16 angebracht sind. Nach dem Aufkleben der Folien 17 und 18 wird der Rohling 11 einer auftragenden Oberflächenbehandlung unterzogen, beispielsweise eloxiert und dadurch die erforderlichen, die Laufabstände zwischen einem Ovalrad und den stirnseitigen Meßkammerwänden bildenden Schichten bzw. die Laufbunde 20 von ca. 0,01 mm sowie beidseitig umlaufende Ränder 21 und 22 angeformt.

Mit den FIGUREN 7 und 8 ist ein weiterer Fertigungszustand dargestellt, der den Rohling 11 nach dem Eloxieren zeigt, wobei die Folien 17 und 18, die als Sperrschichten gedient hatten, wieder entfernt sind. Anstelle der Folien sind selbstverständlich auch andere Sperrschichten denkbar, beispielsweise im Siebdruck aufgetragene Lacke oder Harze. In diesem Fertigungszustand kann die Rohlingplatte 11 in die Erodiervorrichtung eingespannt und nacheinander die Ovalräder ausgeschnitten werden.

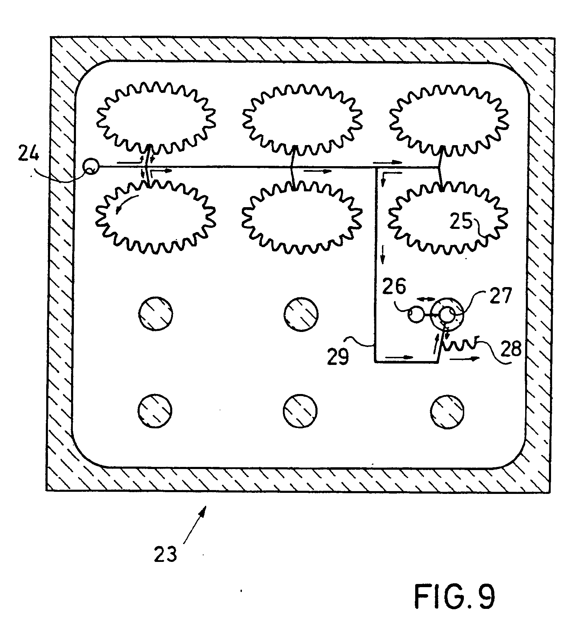

Das Ausführungsbeispiel gemäß FIGUR 9 zeigt eine Rohlingplatte 23, in der lediglich eine Einfädelbohrung 24 zum Durchführen der Drahtelektrode der Erodiervorrichtung angebracht ist. Bei diesem Ausführungsbeispiel werden die Lagerbohrungen, die Aufnahmebohrungen für die Impulsmagnete sowie die Außenkonturen der Ovalräder in einem ununterbrochenen Arbeitsgang nacheinander ausgeschnitten. Bei dem in FIGUR 9 dargestellten Fertigungszustand sind aus der Rohlingplatte 23 bereits mehrere Ovalräder ausgeschnitten- die Negativkontur ist mit 25 bezeichnet. Die FIGUR 9 zeigt ferner, daß – verallgemeinert ausgedrückt – in einem Vor- und Rücklauf des Werkstücks eine Impulsmagnetbohrung 26 und eine Lagerbohrung 27 eines weiteren Ovalrades ausgeräumt ist und im momentanen Fertigungszustand der Außenkonturausschnitt 28 erfolgt. Mit 29 ist der bei dieser Lösung sich ergebende Erodierpfad von einem Schnittplatz zum anderen bezeichnet.

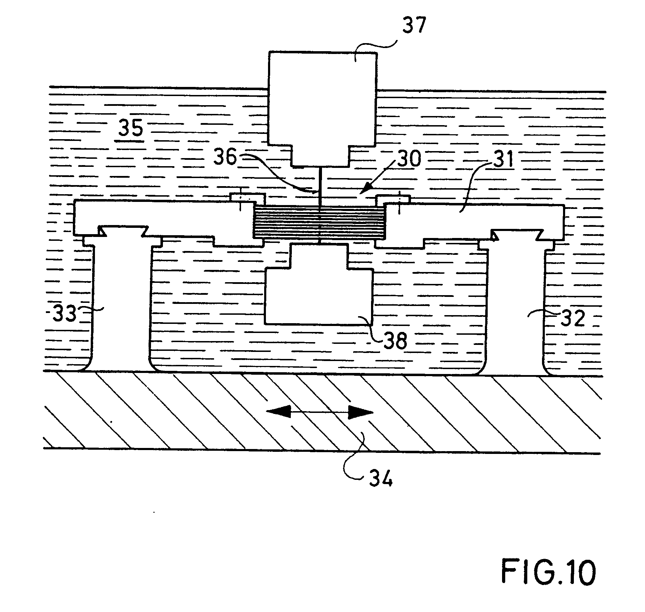

Mit der Skizze FIGUR 10 soll veranschaulicht werden, daß das Verfahren in besonderem Maße für die Serienfertigung geeignet ist. Mit 30 ist ein Stapel von Rohlingplatten bezeichnet, der in geeigneter Weise in der Werkstückaufnahme 31 der Erodiervorrichtung festgespannt ist. Der Vollständigkeit halber sei erwähnt, daß die Werkstückaufnahme 31 auf Rampen 32 und 33 eines numerisch steuerbaren Kreuzschlittens 34 einstell- bzw. befestigt ist, daß der Erodiervorgang im Wasserbad 35 erfolgt und der Erodierdraht 36 – ausgehend von einer oberen Zuführeinrichtung 37, in der der Erodierdraht 36 durch Verglühen ausgerichtet wird – durch den Plattenstapel 30 hindurchgreift und von einer unteren Abzugseinrichtung 38 abgeführt wird.

## Ansprüche

1. Verfahren zum Fertigen eines Ovalrades (10), welches eine Umfangsverzahnung (9), eine Lagerbohrung (7a) und stirnseitige Laufbunde (5, 20) aufweist und in einem Mengenmeßgerät im Zusammenwirken mit einem zweiten Ovalrad (10) als Rotorelement dient, dadurch gekennzeichnet, daß ein Rohling (1) gefertigt wird, an welchem im Abstand der Breite des Ovalrades (10) zwei planparallele Flächen ausgebildet sind,
daß auf den planparallelen Flächen entsprechend dem Durchmesser und der Höhe der Laufbunde (5, 20) verschleißfestes und reibungsarmes Material aufgebracht wird und
daß mittels einer konturgesteuerten Erodiervorrichtung die Lagerbohrung (7a) erodiert und das Ovalrad (10) aus dem Rohling (1) herausgeschnitten wird.

2. Verfahren nach Anspruch 1, dadurch gekennzeichnet, daß auf den planparallelen Flächen des Rohlings (1) Sperrschichten aufgebracht werden, in denen wenigstens den Durchmessern der Laufbunde (5, 20) entsprechende Flächen freigespart sind und
daß der Rohling (1) einer auftragenden Oberflächenbehandlung unterzogen wird, nach der die Sperrschichten wieder entfernt werden.

3. Verfahren nach Anspruch 2, dadurch gekennzeichnet, daß die Sperrschichten im Siebdruckverfahren aufgebracht werden und daß nachfolgend der Rohling (1) eloxiert wird.

4. Verfahren nach Anspruch 2, dadurch gekennzeichnet, daß als Sperrschichten Folien (17, 18) aufgeklebt werden, in welchen dem Durchmesser der Laufbunde (20) entsprechende Öffnungen (19) ausgestanzt sind.

5. Verfahren nach Anspruch 1, dadurch gekennzeichnet, daß die Laufbunde (5, 20) durch Aufkleben von Folie oder durch Siebdruck-Beschichten, vorzugsweise mit einem Polytetrafluoräthylen, aufgetragen werden.

6. Verfahren nach Anspruch 1, dadurch gekennzeichnet, daß als Rohling eine das Ausschneiden mehrerer Ovalräder (10) gestattende Platte (11) gefertigt wird und daß gleichzeitig mit den Ovalrädern (10) zugeordneten Laufbunden (20) beidseitig an der Platte (11) ein umlaufender, erhabener Rand (21, 22) angeformt wird.

7. Verfahren nach Anspruch 5, dadurch gekennzeichnet, daß nacheinander zunächst die Lagerbohrungen, dann die Außenkonturen der jeweiligen aus einer Platte (11) oder einem Plattenstapel (30) schneidbaren Ovalräder (10) erodiert werden.

8. Verfahren nach Anspruch 1, dadurch gekennzeichnet, daß der Schneidvorgang mittels einer Drahtelektrode (36) erfolgt, für die in einem Rohling (23) wenigstens eine Einfädelbohrung (24) angebracht ist.

## Claims

1. Method for the production of an oval gear (10), which comprises peripheral toothing (9), a bearing bore (7a) and operating collars (5, 20) on the end faces and in a flowmeter in conjunction with a second oval gear (10) serves as a rotor element, characterised in that a blank (1) is produced, on which two plane parallel surfaces are formed at the spacing of the width of the oval gear (10), that wear-resistant and low-friction material is applied to the plane parallel surfaces corresponding to the diameter and height of the operating collars (5, 20) and that the bearing bore (7a) is eroded by means of a contour-controlled erosion apparatus and the oval gear (10) is cut out of the blank (1).

2. Method according to Claim 1, characterised in that barrier layers are applied to the plane parallel surfaces of the blank (1), in which surfaces corresponding at least to the diameters of the collars (5, 20) are kept free and that the blank (1) is subject to a coating surface treatment, after which the barrier layers are once more removed.

3. Method according to Claim 2, characterised in that the barrier layers are applied by the screen printing method and that subsequently the blank (1) is subject to anodic treatment.

4. Method according to Claim 2, characterised in that films (17, 18) are stuck on as barrier layers, in which openings (19) corresponding to the diameter of the collars (20) are stamped.

5. Method according to Claim 1, characterised in that the collars (5, 20) are applied by sticking on film or by screen-printing coatings, preferably with polytetrafluoroethylene.

6. Method according to Claim 1, characterised in that a plate (11) allowing the cutting-out of several oval gears (10) is produced as the blank and that at the same time as collars (20) associated with the oval gears (10), a peripheral, raised rim (21, 22) is formed on both sides of the plate (11).

7. Method according to Claim 5, characterised in that first of all the bearing bores, then the outer contours of the respective oval gears (10) able to be cut from a plate (11) or a stack of plates (30), are eroded in succession.

8. Method according to Claim 1, characterised in that the cutting operation takes place by means of a wire electrode (36), for which at least one threading bore (24) is provided in a blank (23).

**Revendications**

1. Procédé pour la fabrication d'une roue ovale (10) qui présente une denture circonférentielle (9), un alésage de palier (7a) et des collerettes de roulement (5, 20) frontales et qui sert, dans un débitmètre, en coopération avec une seconde roue ovale (10), d'élément rotor, caractérisé par le fait qu'une ébauche (1) est fabriquée sur laquelle sont formées, dans l'espacement de la largeur de la roue ovale (10), deux surfaces planes et parallèles, que sur lesdites surfaces planes et parallèles est appliqué, conformément au diamètre et à la hauteur des collerettes de roulement (5, 20), un matériau résistant à l'usure et à faible friction et que, au moyen d'un dispositif d'étincelage à commande par contour, l'alésage de palier (7a) est érodé et que la roue ovale (10) est découpée dans l'ébauche (1).

2. Procédé selon la revendication 1, caractérisé par le fait que sur les surfaces planes et parallèles de l'ébauche (1) sont appliquées des couches d'arrêt dans lesquelles sont évidées des surfaces correspondant au moins aux diamètres des collerettes de roulement (5, 20) et que l'ébauche (1) est soumise à un traitement de surface appliquant après lequel les couches d'arrêt seront enlevées.

3. Procédé selon la revendication 2, caractérisé par le fait que les couches d'arrêt sont appliquées par la méthode de sérigraphe et que l'ébauche (1) est ensuite anodisée.

4. Procédé selon la revendication 2, caractérisé par le fait que, pour servir de couches d'arrêt, des feuilles (17, 18) sont collées dans lesquelles ont été perforées des ouvertures (19) correspondant au diamètre des collerettes de roulement (20).

5. Procédé selon la revendication 1, caractérisé par le fait que les collerettes de roulement (5, 20) sont appliquées par collage de feuilles ou enduction par sérigraphie, de préférence avec un polytétrafluoréthylène.

6. Procédé selon la revendication 1, caractérisé par le fait qu'une plaque (11) permettant le découpage de plusieurs roues ovales (10) est fabriquée comme ébauche et qu'un bord circonférentiel, en relief (21, 22) est formé de part et d'autre sur la plaque (11) simultanément avec des collerettes de roulement (20) associées aux roues ovales (10).

7. Procédé selon la revendication 5, caractérisé par le fait que ce sont successivement d'abord les alésages de palier, ensuite les contours extérieurs des roues ovales (10) respectives pouvant être découpées dans une plaque (11) ou une pile de plaques (30), qui seront anodisés.

8. Procédé selon la revendication 1, caractérisé par le fait que le processus de découpage se fait à l'aide d'un fil-électrode (36) pour lequel une ébauche (23) est pourvue d'au moins une ouverture d'enfilement (24).

FIG. 1

FIG. 2

FIG.3

FIG.5

FIG.7

FIG.4

FIG.6

FIG.8

geläppt

Parallelität 0,01

geläppt

EP 0 282 837 B1

FIG.9

FIG.10